# EUROPÄISCHE PATENTSCHRIFT

(11) **EP 1 968 757 B1**
(45) Veröffentlichungstag und Bekanntmachung des Hinweises auf die Patenterteilung: **17.03.2010**
(21) Anmeldenummer: 06819577.5
(22) Anmeldetag: 17.11.2006
(51) Int. Cl.: B21D 7/08

(54) **VERFAHREN UND VORRICHTUNG ZUM HERSTELLEN GEBOGENER FEDERELEMENTE**
METHOD AND DEVICE FOR PRODUCING BENT SPRING ELEMENTS
PROCEDE ET DISPOSITIF DE FABRICATION D'ELEMENTS DE RESSORT CINTRES

(30) Priorität: 29.12.2005 DE 102005062860
(43) Veröffentlichungstag der Anmeldung: 17.09.2008
(73) Patentinhaber: ROBERT BOSCH GMBH, 70442 Stuttgart (DE)
(72) Erfinder: MAZURKIEWICZ, Julius, B-3290 Diest (BE); CRIEL, Paul, B-3800 St. Truiden (BE); KLECKNER, Josef, 71229 Leonberg (DE)
(86) Internationale Anmeldenummer: PCT/EP2006/068603
(87) Internationale Veröffentlichungsnummer: WO 2007/080023

(56) Entgegenhaltungen:
- DE-A1- 10 115 047
- JP-A- 57 107 724
- US-A- 4 739 490

## Beschreibung

### Stand der Technik

Die Erfindung geht von einem Verfahren und einer Vorrichtung zum Herstellen gebogener Federelemente nach den Oberbegriffen des Anspruchs 1 und 2 aus. Solch ein Verfahren bzw. Vorrichtung ist in der DE 101 15 047 A1 offenbart.

Aus der DE 198 16 609 A1 ist ein Verfahren und eine Vorrichtung zum Herstellen von Flachbalkenscheibenwischern für Fahrzeuge mit gebogenen Federelementen bekannt, so genannten Flachbalken. Diese bilden das Tragelement des Wischblatts und besitzen vorzugsweise eine über die Länge variierende Materialstärke. Sie werden aus einem vergüteten Federstahlband gefertigt, das von zwei paarweise angeordneten Vorschubrollen unter einem kontinuierlichen Vorschub über Führungsrollen einer Biegeeinheit zugeführt wird. Die Biegeeinheit enthält eine Trenneinheit, durch die die einzelnen Tragelemente nach ihrem Biegen voneinander getrennt werden. Während des Trennvorgangs wird der kontinuierliche Vorschub kurzzeitig unterbrochen.

In der Biegeeinheit wird das Federstahlband durch drei Anlagen zunächst in die eine Richtung gebogen und durch eine nachfolgende Anlagestelle um einen geringen Prozentsatz zurück gebogen. Der Rückbiegegrad, der erforderlich ist, um die Formstabilität des gebogenen Tragelements zu gewährleisten, wird empirisch ermittelt. Als mittlerer Wert hat sich je nach Qualität des Federstahlbands ein Rückbiegegrad von etwa 10% bis 40% der zuvor erfolgten Biegung als günstig erwiesen. Die in Förderrichtung ersten beiden Auflagestellen der Biegeeinrichtung werden durch Biegerollen gebildet, während die dritte Auflagestelle eine Schneidkante ist, die mit einem Schneidmesser zusammenwirkt, und das fertig gebogene Tragelement vom Federstahlband trennt. Die Biegerollen können durch Stellmotoren auf das Federstahlband zu und von dem Federstahlband weg verstellt werden. Entsprechend der Lage der Biegerollen ergibt sich eine vorbestimmte Biegung des Federstahlbands. Stellmotoren werden von einer elektronischen Steuereinheit in Abhängigkeit verschiedener Einflussgrößen programmgesteuert aktiviert.

Aus der DE 101 15 047 A1 sind ferner ein Verfahren und eine Vorrichtung zum Herstellen gebogener Federbandabschnitte bekannt. Die Vorrichtung umfasst eine Vorschubeinheit, die ein Federstahlband von einem Vorratswickel einer Biegeeinheit zuführt. Zwischen der Vorschubeinheit und der Biegeeinheit ist ein Richtapparat vorgesehen. Die Biegeeinheit umfasst drei Biegerollen und eine Rückbiegerolle, von denen eine Biegerolle und die Rückbiegerolle über eine Stelleinrichtung quer zum Federstahlband zugestellt werden können. An die Biegeeinheit schließt sich eine Trenneinheit an, die mit einer NC-Steuereinheit verbunden ist und die einzelnen Federbandabschnitte von dem Federstahlband abtrennt. Während des Trennvorgangs wird der Federbandvorschub kurzzeitig gestoppt.

Weiterhin ist aus der US-4,739,490 ein Verfahren bekannt, bei dem die Trennwerkzeuge ohne Stoppen der Vorschubbewegung des Bandes arbeiten.

### Vorteile der Erfindung

Nach der Erfindung wird der Vorschub des Federstahlbands nicht unterbrochen. Dies ist dadurch möglich, dass die Trennwerkzeuge in Längsrichtung des Federstahlbands numerisch gesteuert verfahrbar sind und während des Trennvorgangs mit der Vorschubbewegung des Federstahlbands synchronisiert sind. Die gleichmäßige Vorschubgeschwindigkeit ergibt in der Biegeeinheit einen ebenso gleichmäßigen Biegeverlauf, was sich positiv auf die Eigenschaften der gebogenen Federelemente auswirkt. Demgegenüber arbeiten die bekannten Vorrichtungen mit einem Start-Stop-System mit sehr unterschiedlichen Geschwindigkeiten und großen Beschleunigungen während eines Vorschubs und Biegevorgangs, insbesondere, wenn große Stückzahlen pro Zeiteinheit produziert werden sollen. Der intermittierende Vorschub beansprucht die Bauteile und führt zu einem größeren Verschleiß. Durch den kontinuierlichen Vorschub findet ein besseres Zusammenspiel der Antriebsmotoren zueinander statt, sodass ein geringerer Verschleiß auftritt und ein höherer Ausstoß möglich ist. Ferner kann zur Steuerung des Prozesses auf so genannte Triggerlöcher im Federstahlband verzichtet werden. Diese können zu großen Längenunterschieden und Biegeungenauigkeiten führen.

Bei einer Vorrichtung zum Durchführen des Verfahrens sind die Trennwerkzeuge in Längsrichtung der Vorschubbewegung des Federstahlbands relativ zu diesem verstellbar angeordnet, wobei ihre Verstellbewegung durch eine elektronische Steuereinheit während des Trennvorgangs mit der Schubbewegung des Feder stahlbands synchronisiert ist. Dabei ist es möglich, dass die Trennwerkzeuge zusammen mit der Trenneinheit in Längsrichtung der Vorschubbewegung des Federstahlbands relativ zu diesem verstellbar sind, oder dass die Trennwerkzeuge in einem feststehenden Gehäuse der Trenneinheit angeordnet sind, in dem sie relativ zum Gehäuse und in Längsrichtung der Vorschubbewegung des Federstahlbands relativ zu diesem verstellbar sind. Die zweite Alternative ist einfacher zu verwirklichen, und die Trennwerkzeuge sind präziser anzusteuern.

Zur Führung des Federstahlband zwischen der Biegeeinheit und den Trennwerkzeugen dient eine Rollenführung, deren Rollen pneumatisch auf das Federband einstellbar sind. Ferner ist es zweckmäßig, dass einige Führungsrollen im Bereich der Trennwerkzeuge in Längsrichtung ihre Lage zueinander verändern können, sodass sich ihre Abstände untereinander in Abhängigkeit der Bewegung der Trennwerkzeuge in Längsrichtung vergrößern bzw. verkleinern. Durch die Verstellung der Trennwerkzeuge in Längsrichtung des Federbands ergeben sich unterschiedliche Abstände zwischen der Biegeeinheit und den Trennwerkzeugen. Es ist daher vorteilhaft, wenn sich einige Führungsrollen diesem unterschiedlichen Abstand anpassen können und sich ohne übermäßige Lücken über den Abstand verteilen.

Um viele verschiedenen Längen und Biegungen fertigen zu können, ist es vorteilhaft, die Trennwerkzeuge in einem feststehenden Gehäuse anzuordnen, in dem für die sich in Längsrichtung bewegenden Trennwerkzeuge eine definierte Nullpunktlage bestimmt ist. Um die Biegeeinheit auf den jeweiligen Typ der Federelemente auf den Nullpunkt der Trenneinheit einstellen zu können, ist es zweckmäßig, diese ebenfalls in Längsrichtung verstellbar zu gestalten. Die Verstellung kann beim Rüsten der Vorrichtung auf einen Federelementtyp manuell erfolgen. In vorteilhafter Weise können sie auch motorisch über einen Spindelantrieb verstellt werden. Dadurch ist es möglich, die Verstellung in einen automatischen Rüstvorgang aufzunehmen. Ferner ist es zweckmäßig, nicht nur die Biegeeinheit in Längsrichtung zu verstellen, sondern die Biegeeinheit mit der Vorschubeinheit und mindestens einem NC-Messrad zu einer in Längsrichtung verstellbaren Baueinheit zusammenzufassen.

Um präzise Biegungen zu erzielen, müssen die Fahrwege der verstellbaren Biegerollen bzw. der Rückbiegerolle genau bestimmt werden. Hierzu ist es zweckmäßig, die Biegerollensupporte, an denen die Biegerollen gelagert sind, durch Biegemotoren über Spindeln weitgehend spielfrei zu verstellen. Dabei kann der Fahrweg oder Verstellweg unter Berücksichtigung der Vorgaben einer elektronischen Steuereinheit durch einen rotierenden Inkrementalgeber bestimmt werden, wenn es sich bei den Biegemotoren z.B. um CNC-Biegemotoren handelt. Der Fahrweg der Biegerollensupporte kann auch in vorteilhafter Weise durch einen softwaremäßig integrierten Absolutmesswertgeber ermittelt werden. Dieser kann z.B. einen Glasmaßstab mit einem Sensor umfassen. Er eignet sich sowohl für CNC-Biegemotoren als auch für Biegemotoren, die als Linearmotoren ausgebildet sind.

Zur Entnahme der fertigen Federelemente ist es vorteilhaft, dass sich an die Trenneinheit eine Auswurfeinrichtung anschließt, die angetrieben wird und durch die elektronische Steuereinheit ansteuerbar ist. Dabei ist es zweckmäßig, dass das abzutrennende Federelement ein Stück weit über die Trennwerkzeuge in Vorschubrichtung übersteht, sodass es von der Auswurfeinrichtung leicht erfasst werden kann.

Das Federstahlband ist auf einem Vorratswickel aufgerollt, wobei sich der Durchmesser des Vorratswickels und damit die Vorbiegung des Federstahlbands im Laufe der Fertigung ändern. Damit in der Biegeeinheit weitgehend von gleichen Voraussetzungen ausgegangen werden kann, wird vorgeschlagen, dass vor der Biegeeinheit eine Vorbiegeeinheit vorgesehen ist. Diese wird in Abhängigkeit vom Durchmesser der Vorratswickel und z.B. von der Dicke des Federstahlbands so gesteuert, dass sich während der Produktion unabhängig vom sich ändernden Durchmesser des Vorratswickels gleiche Einlaufbedingungen an der Biegestation ergeben.

Für die Herstellung von Federelementen sind häufig weitere Bearbeitungsschritte erforderlich, z.B. das Beschriften oder Anbringen von Kennzeichen. Um diese Bearbeitungsschritte im gleichen Fertigungsprozess durchführen zu können, ist es zweckmäßig, vor der Biegeeinheit eine Bearbeitungseinheit anzuordnen, deren Werkzeuge in Längsrichtung verfahrbar sind, und während der Einsatzdauer mit der Vorschubbewegung synchronisiert sind. Diese Werkzeuge, die normalerweise eine Unterbrechung der Vorschubbewegung bedingen, können somit ohne Unterbrechung der Vorschubbewegung des Federstahlbands eingesetzt werden.

Die Erfindung wird mit einem Verfahren gemäß den Merkmalen des Patentanspruchs 1 und einer Vorrichtung gemäß den Merkmalen des Patentanspruchs 2 definiert.

### Zeichnung

In der Zeichnung sind Ausführungsbeispiele der Erfindung dargestellt.

Es zeigen:

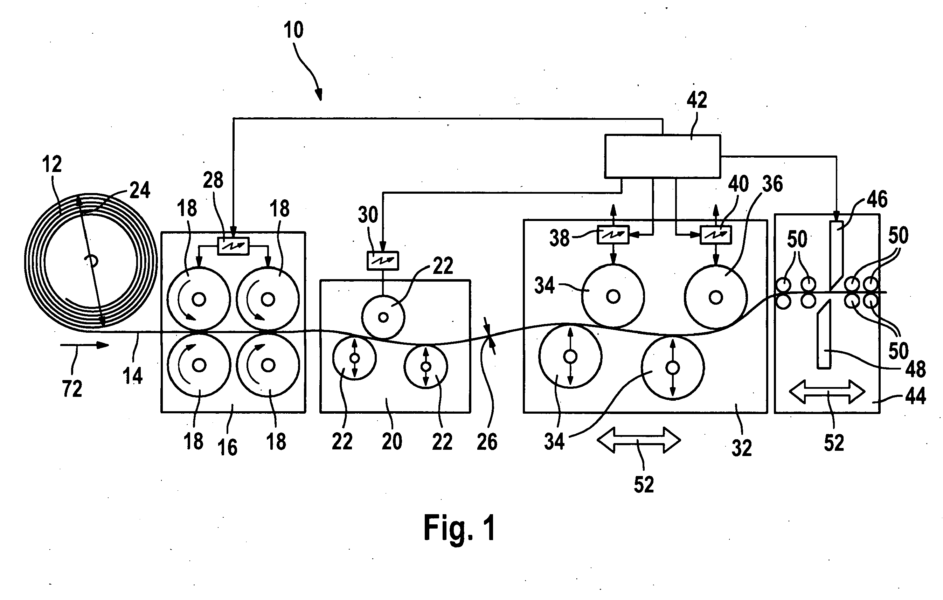

- Fig. 1: eine schematische Darstellung einer erfindungsgemäßen Vorrichtung und,
- Fig. 2: eine Variante zu Fig. 1

### Beschreibung der Ausführungsbeispiele

Eine erfindungsgemäße Vorrichtung 10 umfasst im Wesentlichen eine Vorschubeinheit 16, eine Biegeeinheit 32 und eine Trenneinheit 44. Die Vorschubeinheit 16 besitzt mindestens zwei einander gegenüberliegende Vorschubrollen 18, zwischen denen ein Federstahlband 14 hindurchgeführt ist. Die durch eine Stelleinrichtung 28 zugestellten und angetriebenen Vorschubrollen 18 fördern das Federstahlband 14 von einem Vorratswickel 12 zur Biegeeinheit 32. In dieser sind drei Biegerollen 34 so zueinander angeordnet, dass das Federstahlband 14 mit einer vorgegebenen Krümmung gebogen wird. Mindestens eine der Biegerollen 34 ist durch eine Stelleinrichtung 38 quer zur Längsrichtung 52 des Federstahlbands 14 verstellbar, sodass die Biegekrümmung veränderbar ist. In Vorschubrichtung 72 des Federstahlbands 14 folgt nach den drei Biegerollen 34 eine Rückbiegerolle 36, die über eine Stelleinrichtung 40 quer zur Längsrichtung 52 des Federstahlbands 14 verstellbar ist. Durch die Rückbiegerolle 36 wird das Federstahlband 14 um einen gewissen Betrag zurück gebogen, um dem fertigen Produkt eine größere Stabilität zu geben. Das Zurückbiegen des Federstahlbands 14 wird durch eine entsprechend stärkere Vorwärtsbiegung an den drei Biegerollen 34 berücksichtigt.

In der sich anschließenden Trenneinheit 44 wird ein fertig gebogenes Federelement von dem Federstahlband 14 durch ein oberes Trennwerkzeug 46 und ein unteres Trennwerkzeug 48 abgetrennt. Zum leichteren Trennen wird das Federelement durch Führungsrollen 50 elastisch gerade gedrückt. Die Trennwerkzeuge 46, 48 sind in Längsrichtung 52 verfahrbar, sodass ihre Schnittkanten sich relativ zum Federstahlband 14 in Längsrichtung 52 bewegen können. Während der Schnittbewegung der Trennwerkzeuge 46, 48 wird die Längsbewegung der Trennwerkzeuge 46, 48 mit der Vorschubbewegung des Federstahlbands 14 synchronisiert, sodass ein präziser Schnitt möglich ist. Die Bewegungen der Trennwerkzeuge 46, 48 sowie der Biegerollen 34, 36 und der Vorschubrollen 18 werden durch eine elektronische Steuereinheit 42 in Abhängigkeit relevanter Prozessparameter miteinander koordiniert. Zum Ausgleich der dynamischen Massenkräfte beim Betätigen der Trennwerkzeuge 46, 48 ist es zweckmäßig, dass zu den Trennwerkzeugen 46, 48 gegenläufige Ausgleichsmassen vorgesehen werden. Der ruhige Lauf der Trennwerkzeuge 46, 48 wirkt sich günstig auf die Führung und den Vorschub des Federstahlbands 14 aus.

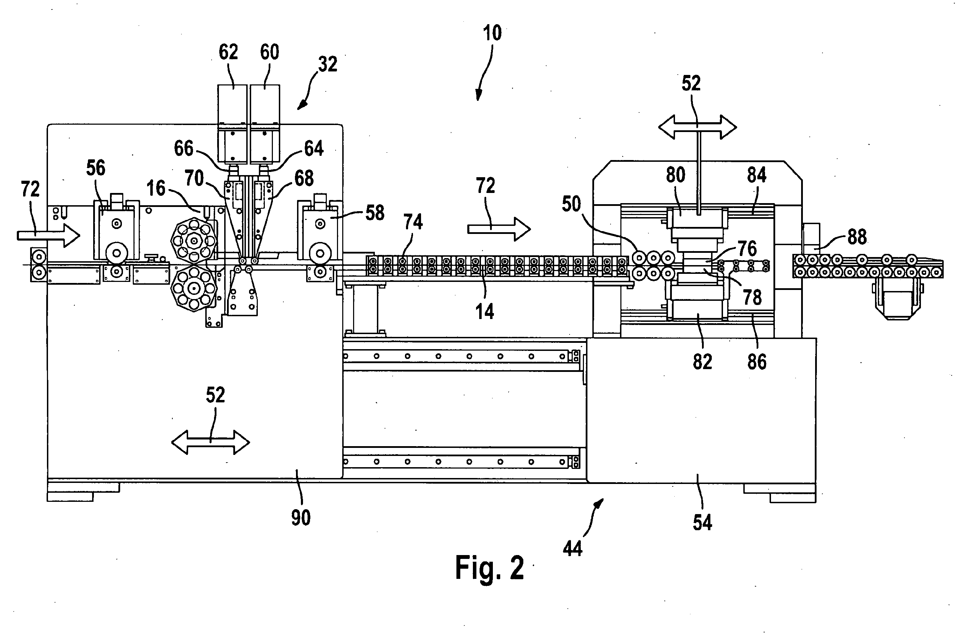

Die Trennwerkzeuge 46, 48 können zusammen mit der Trenneinheit in Längsrichtung 52 verstellt werden oder bei einer ortsfesten Trenneinheit 44 relativ zu einem Gehäuse 54 (Fig. 2). Entsprechend der Verstellung der Trennwerkzeuge 46, 48 verändern die Führungsrollen 50 die Abstände zueinander, sodass sie sich annähernd gleichmäßig über die Führungsstrecke verteilen.

Zwischen der Vorschubeinheit 16 und der Biegeeinheit 32 ist eine Vorbiegeeinheit 20 vorgesehen, die drei Biegerollen 22 aufweist, von denen eine über eine Stelleinrichtung 30 quer zur Längsrichtung 52 des Federstahlbands 14 verstellt werden kann. Die Verstellung erfolgt durch die elektronische Steuereinheit 42 in Abhängigkeit vom Durchmesser 24 des Vorratswickels 12 und der Dicke 26 des Federstahlbands 14. Durch die Vorbiegeeinheit 20 werden die unterschiedlichen Biegegrade des Federstahlbands 14 infolge der unterschiedlichen Durchmesser 24 während des Fertigüngsprozesses mit einfachen Mitteln ausgeglichen, sodass auf ein aufwendiges Richtgerät verzichtet werden kann.

Bei der Ausführung nach Fig. 2 sind die Vorschubeinheit 16, die Biegeeinheit 32 und zwei NC-Messräder 56, 58 zu einer Baueinheit 90 vereinigt, die in Längsrichtung 52 verstellbar ist und somit ihre Position zur Trenneinheit 44 verändern kann. Die Verstellung der Baueinheit 90 kann manuell erfolgen. Sie kann aber auch motorisch über einen Spindelantrieb verstellt werden, wobei der Verstellvorgang Teil eines automatischen Rüstvorgangs sein kann. Durch das NC-Messrad 56 wird der Schlupf des gezogenen und durch das NC-Messrad 58 der Schlupf des geschobenen Federstahlbands 14 gemessen. Die Messräder 56, 58 erfassen den Vorschub exakt, wobei das zweite Messrad 58 das erste Messrad 56 und die zwischen beiden liegende Förderstrecke überwacht. Es ist vorteilhaft, wenn das zweite Messrad 58 an der Außenseite des Gehäuses 54 der Trenneinheit 44 angebracht ist.

In der Biegeeinheit 32 ist die obere Biegerolle 34 an einem Biegerollensupport 70 gelagert, der über eine Spindel 66 von einem Biegemotor 62 verstellt werden kann. Des Weiteren ist die Rückbiegerolle 36 an einem Biegerollensupport 68 gelagert, wobei der Biegerollensupport 68 von einem Biegemotor 60 über eine Spindel 64 verstellt wird. Die Verstellung dieser Stelleinrichtungen ist sehr präzise und annähernd spielfrei.

Zwischen der Biegeeinheit 32 und der Trenneinheit 44 wird das Federstahlband 14 durch eine Rollenführung 74 geführt, deren Führungsrollen pneumatisch auf das Federstahlband 14 eingestellt werden können.

Die Trenneinheit 44 nach Fig. 2 wird durch eine Presse gebildet, deren oberes Stanzwerkzeug 76 an einem oberen Werkzeugschlitten 80 montiert ist, der in einem Gehäuse 54 der Trenneinheit 44 in Längsrichtung 52 mittels Schlittenführungen 84, 86 verschiebbar geführt ist. Entsprechend ist ein unteres Stanzwerkzeug 78 auf einem unteren Werkzeugschlitten 82 montiert, der seinerseits auf einer Schlittenführung 86 in Längsrichtung 52 im Gehäuse 54 verschiebbar geführt ist. Da die Führungsrollen 50 im Bereich der Stanzwerkzeuge 76, 78 eine unterschiedliche Führungsstrecke überbrücken müssen, je nach dem, in welcher Stellung sich die Stanzwerkzeuge 76, 78 befinden, können sie teleskopartig auseinander gefahren werden, sodass sich je nach Stellung der Stanzwerkzeuge 76, 78 größere oder kleinere Abstände zwischen den Führungsrollen 50 einstellen. Die Stanzwerkzeuge 76, 78, die hier als Trennwerkzeuge fungieren, können ebenfalls mit Ausgleichsmassen zusammenwirken.

In Vorschubrichtung 72 am Ende der Vorrichtung 10 befindet sich eine Auswurfeinrichtung 88, die angetrieben und durch die elektronische Steuereinheit 42 ansteuerbar ist. Sie erfasst das über die Stanzwerkzeuge 76, 78 vorstehende Ende des fertig gebogenen Federelements und legt es nach dem Abtrennen in einen Vorratsbehälter ab.

## Patentansprüche

1. Verfahren zum Herstellen gebogener Federelemente aus einem Federstahlband (14), wobei eine Vorschubeinheit (16) das Federstahlband (14) von einem Vorratswickel (12) zu einer Biegeeinheit (32) mit mindestens drei Biegerollen (34) und einer Rückbiegerolle (36) fördert, von denen mindestens eine Biegerolle (34) und die Rückbiegerolle (36) durch Biegemotoren (60, 62) quer zum Federstahlbands (14) verstellbar sind, und wobei sich an die Biegeeinheit (32) eine Trenneinheit (44) anschließt, die das Federstahlband (14) mittels Trennwerkzeugen (46, 48; 76, 78) in einzelne Federelemente trennt, **dadurch gekennzeichnet, dass** die Trennwerkzeuge (46, 48; 76, 78) in Längsrichtung des Federstahlbands (14) numerisch gesteuert verfahrbar sind und während des Trennvorgangs mit der Vorschubbewegung des Federstahlbands (14) synchronisiert sind und, dass einige Führungsrollen (50) im Bereich der Trennwerkzeuge (46, 48; 76, 78) in Längsrichtung (52) ihre Lage zueinander so verändern, dass sich ihre Abstände untereinander in Abhängigkeit der Bewegung der Trennwerkzeuge (46, 48; 76, 78) in Längsrichtung (52) vergrößern bzw. verkleinern.

2. Vorrichtung (10) zum Durchführen des Verfahrens nach Anspruch 1 mit einem Vorratswickel (12) einer Vorschubeinheit (16), Biegemotoren (60, 62) einer Biegeeinheit (32) mit mindestens drei Biegerotten (34) und einer Rückbiegerolle (36), von denen mindestens eine Biegerolle (34) und die Rückbiegerolle (36) durch die Biegemotoren (60, 62) quer zum Federstahlband (14) verstellbar sind, und wobei sich an die Biegeeinheit (32) eine Trenneinheit (44) anschließt, die ein oberes Trennwerkzeug (46) und ein unteres Trennwerkzeug (48) besitzt; zwischen denen das Federstahlband (14) hindurchgeführt wird, und in einzelne Federelemente getrennt wird **dadurch gekennzeichnet, dass** die Trennwerkzeuge (46, 48; 76, 78) in Längsrichtung (52) der Vorschubbewegung des Federstahlbands (14) relativ zu diesem verstellbar angeordnet sind, wobei ihre Verstellbewegung durch eine elektronische Steuereinheit (42) während des Trennvorgangs mit der Vorschubbewegung des Federstahlbands (14) synchronisiert ist, und
dass nach der Biegeeinheit (32) eine Rollenführung (74) vorgesehen ist, deren Rollen pneumatisch auf das Federstahlbands (14) einstellbar sind, wobei
einige Führungsrollen (50) im Bereich der Trennwerkzeuge (46, 48; 76, 78) in Längsrichtung (52) ihre Lage zueinander so verändern können, dass sich ihre Abstände untereinander in Abhängigkeit der Bewegung der Trennwerkzeuge (46, 48; 76, 78) in Längsrichtung (52) vergrößern bzw. verkleinern.

3. Vorrichtung (10) nach Anspruch 2, **dadurch gekennzeichnet, dass** die Trennwerkzeuge (46, 48; 76, 78) zusammen mit der Trenneinheit (44) in Längsrichtung (52) der Vorschubbewegung des Federstahlbands (14) relativ zu diesem verstellbar sind.

4. Vorrichtung (10) nach Anspruch 2, **dadurch gekennzeichnet, dass** die Trennwerkzeuge (46, 48; 76, 78) in einem feststehenden Gehäuse (54) der Trenneinheit (44) angeordnet sind, in dem sie relativ zum Gehäuse (54) und in Längsrichtung (52) der Vorschubbewegung des Federstahlbands (14) relativ zu diesem verstellbar sind.

5. Vorrichtung (10) nach Anspruch 4, **dadurch gekennzeichnet, dass** die Trennwerkzeuge ein oberes Stanzwerkzeuge (76) und ein unteres Stanzwerkzeug (78) sind, die auf einem oberen Werkzeugschlitten (80) bzw. auf einem unteren Werkzeugschlitten (82) montiert sind, wobei die Werkzeugschlitten (80, 82) auf Schlittenführungen (84, 86) im Gehäuse (54) in Längsrichtung (52) geführt sind.

6. Vorrichtung (10) nach einem der Ansprüche 4 oder 5, **dadurch gekennzeichnet, dass** zum Ausgleich der dynamischen Massenkräfte beim Betätigen der Trennwerkzeuge (46, 48, 76, 78) zu diesen gegenläufige Ausgleichsmassen vorgesehen sind.

7. Vorrichtung (10) nach einem der vorhergehenden Ansprüche, **dadurch gekennzeichnet, dass** sich an die Trenneinheit (44) eine Auswurfeinrichtung (88) anschließt, die angetrieben wird und durch die elektronische Steuereinheit (42) ansteuerbar ist.

8. Vorrichtung (10) nach einem der Ansprüche 2 bis 9, **dadurch gekennzeichnet, dass** mindestens eine der Biegerollen (34) an einem Biegerollensupport (70) und die Rückbiegerolle (36) an einem Biegerollensupport (68) gelagert sind, wobei die Biegerollensupporte (68, 70) von Biegemotoren (60, 62) über Spindeln (64, 66) verstellt werden.

9. Vorrichtung (10) nach Anspruch 10, **dadurch gekennzeichnet, dass** die Biegemotoren (60, 62) CNC-Biegemotoren sind, wobei der Fahrweg der Biegerollensupporte (68, 70) unter Berücksichtigung der Vorgaben der Steuereinheit (42) durch einen rotierenden Inkrementalgeber bestimmt wird.

10. Vorrichtung (10) nach Anspruch 10, **dadurch gekennzeichnet, dass** die Biegemotoren (60, 62) Linearmotoren sind.

11. Vorrichtung (10) nach Anspruch 11 oder 12, **dadurch gekennzeichnet, dass** der Fahrweg der Biegerollensupporte (68, 70) durch einen softwaremäßig integrierten Absolutmesswertgeber ermittelt wird.

12. Vorrichtung (10) nach Anspruch 13, **dadurch gekennzeichnet, dass** der Absolutmesswertgeber einen Glasmaßstab mit einem Sensor umfasst.

13. Vorrichtung (10) nach einem der Ansprüche 2 bis 14, **dadurch gekennzeichnet, dass** die Biegeeinheit (32), die Vorschubeinheit (16) und mindestens ein NC-Messrad (56, 58) zu einer in Längsrichtung (52) verstellbaren Baueinheit (90) zusammengefasst sind.

14. Vorrichtung (10) nach Anspruch 14, **dadurch gekennzeichnet, dass** zwei NC-Messräder (56, 58) vorgesehen sind, von denen ein erstes (56) in Vorschubrichtung (72) vor der Biegeeinheit (32) und ein zweites (58) nach der Biegeeinheit (32) angeordnet sind.

15. Vorrichtung (10) nach Anspruch 16, **dadurch gekennzeichnet, dass** das zweite NC-Messrad (58) an dem Gehäuse (54) der Trenneinheit (44) angeordnet ist.

16. Vorrichtung (10) nach einem der Ansprüche 15 bis 17, **dadurch gekennzeichnet, dass** die Baueinheit (90) motorisch über einen motorischen Spindelantrieb verstellt werden kann, wobei der Verstellvorgang Teil eines automatischen Rüstvorgangs ist.

17. Vorrichtung (10) nach einem der vorhergehenden Ansprüche, **dadurch gekennzeichnet, dass** vor der Biegeeinheit (32) eine Vorbiegeeinheit (20) vorgesehen ist.

18. Vorrichtung (10) nach einem der vorhergehenden Ansprüche, **dadurch gekennzeichnet, dass** vor der Biegeeinheit (32) eine Bearbeitungseinheit zum Beschriften oder Anbringen von Kennzeichen angeordnet ist, deren Werkzeuge in Längsrichtung (52) verfahrbar und während der Einsatzdauer mit der Vorschubbewegung synchronisiert sind.

## Claims

1. Method for production of bent spring elements from a spring steel strip (14), a feed unit (16) conveying the spring steel strip (14) from a stock roll (12) to a bending unit (32) having at least three bending rollers (34) and one reverse-bending roller (36), of which at least one bending roller (34) and the reverse-bending roller (36) are adjustable transversely with respect to the spring steel strip (14) by means of bending motors (60, 62), and the bending unit (32) being followed by a separating unit (44) which separates the spring steel strip (14) into individual spring elements by means of separating tools (46, 48; 76, 78), **characterized in that** the separating tools (46, 48; 76, 78) are movable by numerical control in the longitudinal direction of the spring steel strip (14) and, during the separating operation, are synchronized with the feed movement of the spring steel strip (14), and **in that** some guide rollers (50) in the region of the separating tools (46, 48; 76, 78) vary their position with respect to one another in the longitudinal direction (52) in such a way that the distances between them are increased or reduced as a function of the movement of the separating tools (46, 48; 76, 78) in the longitudinal direction (52).

2. Apparatus (10) for carrying out the method according to Claim 1 with a stock roll (12), with a feed unit (16), with bending motors (60, 62) and with a bending unit (32) having at least three bending rollers (34) and one reverse-bending roller (36), of which at least one bending roller (34) and the reverse-bending roller (36) are adjustable transversely with respect to the spring steel strip (14) by means of the bending motors (60, 62), the bending unit (32) being followed by a separating unit (44) which possesses an upper separating tool (46) and a lower separating tool (48), between which the spring steel strip (14) is lead through and is separated into individual spring elements, **characterized in that** the separating tools (46, 48; 76, 78) are arranged adjustably in relation to the spring steel strip (14) in the longitudinal direction (52) of the feed movement of the latter, their adjusting movement being synchronized with the feed movement of the spring steel strip (14) during the separating operation by means of an electronic control unit (42), and **in that**, downstream of the bending unit (32), a roller guide (74) is provided, the rollers of which can be set pneumatically to the spring steel strip (14), some guide rollers (50) in the region of the separating tools (46, 48; 76, 78) being capable of varying their position with respect to one another in the longitudinal direction (52) in such a way that the distances between them are increased or reduced as a function of the movement of the separating tools (46, 48; 76, 78) in the longitudinal direction (52).

3. Apparatus (10) according to Claim 2, **characterized in that** the separating tools (46, 48; 76, 78), together with the separating unit (44), are adjustable in relation to the spring steel strip (14) in the longitudinal direction (52) of the feed movement of the latter.

4. Apparatus (10) according to Claim 2, **characterized in that** the separating tools (46, 48; 76, 78) are arranged in a stationary housing (54) of the separating unit (44), in which housing they are adjustable in relation to the housing (54) and in relation to the spring steel strip (14) in the longitudinal direction (52) of the feed movement of the latter.

5. Apparatus (10) according to Claim 4, **characterized in that** the separating tools are an upper stamping tool (76) and a lower stamping tool (78) which are mounted respectively on an upper tool slide (80) and on a lower tool slide (82), the tool slides (80, 82) being guided in the longitudinal direction (52) on slide guides (84, 86) in the housing (54).

6. Apparatus (10) according to either one of Claims 4 and 5, **characterized in that**, to compensate the dynamic mass forces during the actuation of the separating tools (46, 48; 76, 78), compensating masses contradirectional to these are provided.

7. Apparatus (10) according to one of the preceding claims, **characterized in that** the separating unit (44) is followed by an ejection device (88) which is driven and which can be activated by means of the electronic control unit (42).

8. Apparatus (10) according to one of Claims 2 to 7, **characterized in that** at least one of the bending rollers (34) is mounted on a bending-roller support (70) and the reverse-bending roller (36) is mounted on a bending-roller support (68), the bending-roller supports (68, 70) being adjusted by bending motors (60, 62) via spindles (64, 66).

9. Apparatus (10) according to Claim 8, **characterized in that** the bending motors (60, 62) are CNC bending motors, the travel of the bending-roller supports (68, 70) being determined by a rotating incremental transducer, taking into account the instructions of the control unit (42).

10. Apparatus (10) according to Claim 8, **characterized in that** the bending motors (60, 62) are linear motors.

11. Apparatus (10) according to Claim 9 or 10, **characterized in that** the travel of the bending-roller supports (68, 70) is determined by a software-integrated zero-based measurement transducer.

12. Apparatus (10) according to Claim 11, **characterized in that** the zero-based measurement transducer comprises a glass scale with a sensor.

13. Apparatus (10) according to one of Claims 2 to 12, **characterized in that** the bending unit (32), the feed unit (16) and at least one NC measuring wheel (56, 58) are combined into a structural unit (90) adjustable in the longitudinal direction (52).

14. Apparatus (10) according to Claim 12, **characterized in that** two NC measuring wheels (56, 58) are provided, of which a first (56) is arranged upstream of the bending unit (32) in the feed direction (72) and a second (58) is arranged downstream of the bending unit (32) in the feed direction (72).

15. Apparatus (10) according to Claim 14, **characterized in that** the second NC measuring wheel (58) is arranged on the housing (54) of the separating unit (44).

16. Apparatus (10) according to one of Claims 13 to 15, **characterized in that** the structural unit (90) can be adjusted motively via a motor spindle drive, the adjusting operation being part of an automatic setting-up operation.

17. Apparatus (10) according to one of the preceding claims, **characterized in that** a prebending unit (20) is provided upstream of the bending unit (32).

18. Apparatus (10) according to one of the preceding claims, **characterized in that** a processing unit for labelling or for applying distinguishing marks is arranged upstream of the bending unit (32), the tools of which processing unit are movable in the longitudinal direction (52) and are synchronized during the period of use with the feed movement.

## Revendications

1. Procédé de fabrication d'éléments élastiques cintrés à partir d'un feuillard (14) en acier à ressort, dans lequel une unité d'avancement (16) transporte le feuillard (14) en acier à ressort depuis une bobine de réserve (12) jusqu'à une unité de cintrage (32) qui présente au moins trois cylindres de cintrage (34) et un cylindre de décintrage (36) parmi lesquels au moins un cylindre de cintrage (34) et le cylindre de décintrage (36) peuvent être ajustés transversalement par rapport au feuillard (14) en acier à ressort par des moteurs de cintrage (60, 62) et
dans lequel une unité de découpe (44) qui découpe le feuillard (14) en acier à ressort en éléments séparés de ressort au moyen d'outils de découpe (46, 48; 76, 78) suit l'unité de cintrage (32),
**caractérisé en ce que**
les outils de découpe (46, 48; 76, 78) peuvent être déplacés sous commande numérique dans le sens de la longueur du feuillard (14) en acier à ressort et sont synchronisés sur le déplacement d'avancement du feuillard (14) en acier à ressort pendant l'opération de découpe et
**en ce que** certains cylindres de guidage (50) situés dans la zone occupée par les outils de découpe (46, 48; 76, 78) modifient leur position mutuelle dans le sens de la longueur (52) de telle sorte que leur distance mutuelle augmente ou diminue en fonction du déplacement des outils de découpe (46, 48; 76, 78) dans le sens de la longueur (52).

2. Dispositif (10) en vue de l'exécution du procédé selon la revendication 1 et présentant une bobine de réserve (12), une unité d'avancement (16), des moteurs de cintrage (60, 62), une unité de cintrage (32) qui présente au moins trois cylindres de cintrage (34) et un cylindre de décintrage (36) parmi lesquels au moins un cylindre de cintrage (34) et le cylindre de décintrage (36) peuvent être déplacés transversalement par rapport au feuillard (14) en acier à ressort par les moteurs de cintrage (60, 62), et une unité de découpe (44), qui possède un outil supérieur de découpe (46) et un outil inférieur de découpe (48) entre lesquels le feuillard (14) en acier à ressort est avancé et est découpé en éléments de ressort séparés, suivant l'unité de cintrage (32),
**caractérisé en ce que**
les outils de découpe (46, 48; 76, 78) sont disposés de manière à pouvoir être ajustés par rapport au feuillard (14) en acier à ressort dans le sens de la longueur (52) du déplacement d'avancement de ce dernier, leur déplacement d'ajustement étant synchronisé sur le déplacement d'avancement du feuillard (14) en acier à ressort par une unité électronique de commande électronique (42) pendant l'opération de découpe, et
**en ce qu'**après l'unité de cintrage (32) est prévu un guide (74) à cylindres dont les cylindres peuvent être ajustés pneumatiquement sur le feuillard (14) en acier à ressort, certains cylindres de guidage (50) situés dans la zone occupée par les outils de découpe (46, 48; 76, 78) pouvant modifier leur position mutuelle dans le sens de la longueur (52) de manière à augmenter ou diminuer leur distance mutuelle en fonction du déplacement des outils de découpe (46, 48; 76, 78) dans le sens de la longueur (52).

3. Dispositif (10) selon la revendication 2, **caractérisé en ce que** les outils de découpe (46, 48; 76, 78) peuvent être déplacés en même temps que l'unité de découpe (44) par rapport au feuillard (14) en acier à ressort dans le sens de la longueur (52) du déplacement d'avancement du feuillard en acier à ressort.

4. Dispositif (10) selon la revendication 2, **caractérisé en ce que** les outils de découpe (46, 48; 76, 78) sont disposés dans un boîtier stationnaire (54) de l'unité de découpe (44), dans lequel ils peuvent être ajustés par rapport au boîtier (54) et dans le sens de la longueur (52) du déplacement d'avancement du feuillard (14) en acier à ressort par rapport à ce dernier.

5. Dispositif (10) selon la revendication 4, **caractérisé en ce que** les outils de découpe sont un outil supérieur d'estampage (76) et un outil inférieur d'estampage (78) montés respectivement sur un chariot supérieur d'outil (80) et sur un chariot inférieur d'outil (82), les chariots d'outil (80, 82) étant guidés dans le sens de la longueur (52) dans le boîtier (54) sur des guide-chariots (84, 86).

6. Dispositif (10) selon l'une des revendications 4 ou 5, **caractérisé en ce que**, pour compenser les forces dynamiques d'inertie lors de l'actionnement des outils de découpe (46, 48, 76, 78), des masses d'équilibrage se déplaçant en sens inverse par rapport à ces dernières sont prévues.

7. Dispositif (10) selon l'une des revendications précédentes, **caractérisé en ce qu'**un dispositif d'expulsion (88) qui est entraîné et qui peut être commandé par l'unité électronique de commande électronique (42) suit l'unité de découpe (44).

8. Dispositif (10) selon l'une des revendications 2 à 7, **caractérisé en ce qu'**au moins l'un des cylindres de cintrage (34) est monté sur un support (70) de cylindre de cintrage et **en ce que** le cylindre de décintrage (36) est monté sur un support (68) de cylindre de cintrage, les supports (68, 70) de cylindre de cintrage étant ajustés par des moteurs de cintrage (60, 62) par l'intermédiaire de broches (64, 66).

9. Dispositif (10) selon la revendication 8, **caractérisé en ce que** les moteurs de cintrage (60, 62) sont des moteurs de cintrage CNC, la trajectoire des supports (68, 70) de cylindre de cintrage étant déterminée par un compteur rotatif incrémentiel qui tient compte des données provenant de l'unité de commande (42).

10. Dispositif (10) selon la revendication 8, **caractérisé en ce que** les moteurs de cintrage (60, 62) sont des moteurs linéaires.

11. Dispositif (10) selon les revendications 9 ou 10, **caractérisé en ce que** la trajectoire des supports (68, 70) de cylindre de cintrage est déterminée par un émetteur de valeurs de mesure absolues intégré au logiciel.

12. Dispositif (10) selon la revendication 11, **caractérisé en ce que** l'émetteur de valeurs de mesure absolues comprend une réglette graduée en verre dotée d'un détecteur.

13. Dispositif (10) selon l'une des revendications 2 à 12, **caractérisé en ce que** l'unité de cintrage (32), l'unité d'avancement (16) et au moins une roue de mesure NC (56, 58) sont rassemblées en un module (90) ajustable dans le sens de la longueur (52).

14. Dispositif (10) selon la revendication 12, **caractérisé en ce que** deux roues de mesure NC (56, 58) parmi lesquelles une première (56) est disposée dans la direction d'avancement (72) avant l'unité de cintrage (32) et une deuxième (58) est disposée après l'unité de cintrage (32) sont prévues.

15. Dispositif (10) selon la revendication 14, **caractérisé en ce que** la deuxième roue de mesure NC (58) est disposée sur le boîtier (54) de l'unité de découpe (44).

16. Dispositif (10) selon l'une des revendications 13 à 15, **caractérisé en ce que** le module (90) peut être déplacé par un moteur par l'intermédiaire d'un entraînement motorisé à broche, l'opération d'ajustement faisant partie d'une opération automatique d'équipement.

17. Dispositif (10) selon l'une des revendications précédentes, **caractérisé en ce qu'**une unité de pré-cintrage (20) est prévue en amont de l'unité de cintrage (32).

18. Dispositif (10) selon l'une des revendications précédentes, **caractérisé en ce qu'**une unité de traitement qui permet d'inscrire ou d'apposer des caractéristiques et dont les outils peuvent être déplacés dans le sens de la longueur (52) et sont synchronisés sur le déplacement d'avancement pendant leur durée d'utilisation est disposée en amont de l'unité de cintrage (32).
